# EUROPEAN PATENT APPLICATION

(11) **EP 4 446 360 A1**
(43) Date of publication of application: **16.10.2024**
(21) Application number: 22904296.5
(22) Date of filing: 08.12.2022
(51) Int. Cl.: C08G 73/10, B64G 1/22, B64G 1/44, B64G 1/58

(54) **POLYIMIDE FOR SPACECRAFT, POLYIMIDE FILM FOR SPACECRAFT, AND SPACECRAFT MEMBER INCLUDING SAME**

(30) Priority: 09.12.2021 JP 2021199785; 06.12.2022 JP 2022195072
(71) Applicant: NIPPON STEEL CHEMICAL & MATERIAL CO., LTD., Tokyo 103-0027 (JP)
(72) Inventor: MORI, Akira, Tokyo 103-0027 (JP); KIMOTO, Yugo, Chofu-shi, Tokyo 182-8522 (JP); UMEDA, Kaori, Tsukuba-shi, Ibaraki 305-0032 (JP)
(74) Representative: Vossius & Partner Patentanwälte Rechtsanwälte mbB
(86) International application number: PCT/JP2022/045279
(87) International publication number: WO 2023/106369

(57) **Abstract**

Provided are a polyimide film that, when applied as a material for a spacecraft, exhibits excellent resistance to atomic oxygen derived from an oxygen molecule which is an atmospheric residual component and generates a small amount of outgas compound upon heating; and a polyimide used in the polyimide film. A polyimide for a spacecraft, the polyimide containing a diamine-derived structural unit and an aromatic acid dianhydride-derived structural unit, wherein the polyimide contains, as the diamine-derived structural unit, at least a structural unit derived from a silicon-containing diamine represented by the following formula (1) (provided that the silicon-containing diamine has a number average molecular weight of 500 or less), and a proportion of the structural unit derived from the silicon-containing diamine is 5 to 100 mol% relative to the entire diamine-derived structural unit. (In the formula, R¹ and R² are each independently a divalent aliphatic hydrocarbon group having 3 to 20 carbons, R³, R⁴, R⁵, and R⁶ are each independently a monovalent aliphatic hydrocarbon group having 1 to 3 carbons, and m is 1 or 2.)

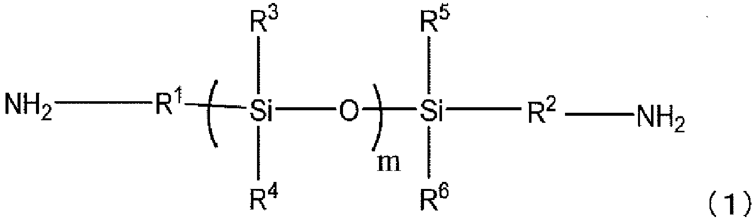

## Description

### Technical Field

The present invention relates to a polyimide film useful as an artificial satellite member, particularly a spacecraft member such as a panel structure of a low-earth-orbit satellite.

### Background Art

In outer space, there are various environmental factors different from those in the atmosphere, such as vacuum, radiation, ultraviolet rays from the sun, solar reflection and infrared radiation by the earth, the presence of minute particles such as space debris and meteoroid, temperature cycles caused by repeated sunshine and shade, and residual compound in the earth's atmosphere. Therefore, spacecrafts such as artificial satellites, artificial planets, space probes, and space stations and materials constituting them need to be designed differently from airframes and materials used only in the atmosphere.

Even in the same outer space, the influence of the environmental factors varies depending on the orbital altitude and orbital inclination angle of the spacecraft. For example, in an orbit (hereinafter referred to as a low-altitude orbit) in which an earth observation satellite orbits at an altitude of 700 km or less, particularly 100 km or more and 700 km or less, the concentration of atomic oxygen (hereinafter abbreviated as AO) derived from residual oxygen which is an atmospheric constituent is high. AO is generated when oxygen molecules absorb vacuum ultraviolet rays contained in sunlight and are photodissociated. It is known that, when AO collides with a spacecraft flying at a speed of about 8 km per second, the spacecraft and materials constituting the spacecraft are greatly damaged (Non-Patent Literature 1).

Polyimide is an example of a main organic material constituting a spacecraft. Since polyimide has a rigid aromatic ring and an imide ring in the main chain, it is excellent in heat resistance and stability to sunlight and radiation. By taking advantage of this feature, it is applied to a thermal protective film (thermal blanket) of a spacecraft. The thermal blanket is a multilayer film in which gold, silver, or aluminum is deposited on a polyimide film. As a result, the inflow of heat due to sunlight and the emission of heat from the interior of the spacecraft can be controlled, and the temperature in the interior of the spacecraft can be maintained in an appropriate range.

However, a known polyimide film (Kapton (registered trademark)) has insufficient durability against AO in a spacecraft which acts in the low-altitude orbit for a long period of time, such as an artificial satellite or a space station (Non-Patent Literature 2). That is, when Kapton (registered trademark) is used for such an application, erosion occurs due to irradiation with AO, and its thermal control function as a thermal blanket is significantly reduced.

Further, it is known that the introduction of a fluorine atom, a phosphorus atom, or a silicon atom is effective as a technique for improving the durability of the polyimide film against AO. For example, the present inventors have found that a polyimide film having a specific siloxane skeleton in the main chain is excellent in durability against AO (Non-Patent Literature 3).

That is, in the polyimide film having the specific siloxane skeleton in the main chain, erosion due to AO hardly occurred. It is considered that a thin film layer of SiO₂ was formed on a surface of the polyimide film and functioned as a protective layer against AO. As the polyimide having a siloxane skeleton in the main chain, polyimides as described in Patent Documents 1 and 2 are known.

### Citation List

### Patent Document

Patent Document 1: JP 5948545 B
Patent Document 2: JP 2019-77863 A

### Non-Patent Literature

Non-Patent Literature 1: R. C. Tennyson, Proc. of the Behavior of Systems in the Space Environment, Kluwer Academic Publishers, 233 (1993)
Non-Patent Literature 2: B.A. Banks, A. Snyder, S. K. Miller, Issues and Consequences of Atoinic Oxygen Undercutting of Protected Polymers in Low Earth Orbit. NASA/TM-2002-211577 (2002)
Non-Patent Literature 3: Eiji Miyazaki, Polyimide Resistant to Low-Altitude Space Environment at Altitudes of Hundreds of Kilometers, MATEARIAL STAGE Vol. 10, No. 10 (2011)

### Summary of Invention

### Technical Problem

As a material for a spacecraft, there is a demand for a material in which erosion and changes in surface physical properties are smaller upon irradiation with AO.

Further, when a known polyimide film having a siloxane skeleton in the main chain is used as a material for a spacecraft, the problem to be solved is to prevent occurrence of "outgas" from the polyimide film. The term "outgas" as used herein refers to a phenomenon in which a low molecular weight organic substance contained in a film is gasified and released from the film in a vacuum environment such as outer space or a heating environment in the atmosphere. The low molecular weight organic substance released under such an environment adheres to a surface of each device constituting a spacecraft and degrades a function of the device. For example, it causes an increase in solar absorptance of solar reflectors, thermal blankets, and heat sinks, and a decrease in transmittance and reflectance of mirrors and lenses. Examples of an outgas compound of the polyimide film having a siloxane skeleton in the main chain include low molecular weight cyclic siloxanes.

In light of the above circumstances, an object of the present invention is to provide a polyimide film that, when applied as a material for a spacecraft, exhibits excellent resistance to AO and generates a small amount of outgas compound upon heating.

### Solution to Problem

As a result of intensive studies, the present inventors have found that a polyimide having a specific structure and a polyimide film using the same can satisfy the above-mentioned properties, and have completed the present invention.

That is, the present invention relates to a polyimide for a spacecraft, the polyimide containing a diamine-derived structural unit and an aromatic acid dianhydride-derived structural unit, wherein the polyimide contains, as the diamine-derived structural unit, at least a structural unit derived from a silicon-containing diamine represented by the following formula (1) (provided that the silicon-containing diamine has a number average molecular weight of 500 or less); the polyimide contains, as the aromatic acid dianhydride-derived structural unit, preferably a structural unit derived from one or more selected from 1, 2, 4, 5-tetracarboxylic dianhydride, 3,3', 4,4'-diphenyl ether tetracarboxylic dianhydride, 3,3',4,4'-diphenyl sulfone tetracarboxylic dianhydride, and 3,3',4,4'-biphenyltetracarboxylic dianhydride; and a proportion of the structural unit derived from the silicon-containing diamine is 5 to 100 mol% relative to the entire diamine-derived structural unit: 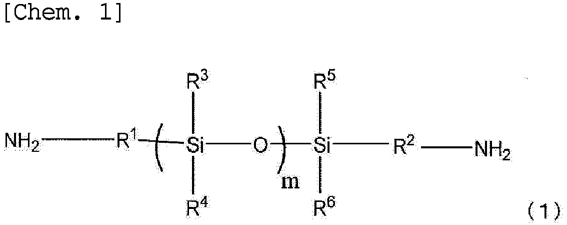 (wherein R¹ and R² are each independently a divalent aliphatic hydrocarbon group having 3 to 20 carbons, R³, R⁴, R⁵, and R⁶ are each independently a monovalent aliphatic hydrocarbon group having 1 to 3 carbons, and m is 1 or 2).

The present invention also relates to a polyimide film for a spacecraft, the polyimide film containing the polyimide in an amount of 90 wt.% or more.

The polyimide for a spacecraft and the polyimide film for a spacecraft of the present invention can be suitably used as a member for a spacecraft. In particular, the polyimide film for a spacecraft of the present invention can be suitably used in a solar battery panel structure for a low-earth-orbit satellite. Further, a laminated film obtained by laminating a metal film on the polyimide film for a spacecraft can be suitably used in a thermal blanket for a low-earth-orbit satellite, and the thermal blanket is suitably used on a surface or inside of an airframe of an artificial satellite by being laminated if necessary.

In the present invention, the term "spacecraft" refers to an artificial object that is defined by "ISO 14950: 2004 (en) Space systems Unmanned spacecraft operability" and is assumed to be used outside the atmosphere (in the outer space). Examples of the spacecraft include artificial satellites, artificial planets, space probes, and space stations. Advantageous Effects of Invention

The polyimide for a spacecraft of the present invention and the polyimide film for a spacecraft obtained therefrom generate a smaller amount of outgas compound upon heating as compared with a known polyimide film having a siloxane skeleton in the main chain. They are also excellent in resistance to AO. Therefore, the present invention can be suitably applied to a spacecraft which is an airframe flying in the outer space, such as an artificial satellite or a space station, and can be suitably applied to a spacecraft member used in a low-altitude ort of 100 km to 700 km where the concentration of AO isso high that AO affects the member, particularly in an ultra-low-altitude orbit of 150 km to 300 km where the concentration of AO is extremely high and AO greatly affects the member. As the spacecraft member, a solar battery panel structure for a low-earth-orbit satellite and a thermal blanket are particularly preferable.

### Description of Embodiments

The polyimide for a spacecraft of the present invention is a polyimide for a spacecraft containing a diamine-derived structural unit and an aromatic acid dianhydride-derived structural unit, wherein the polyimide contains, as the diamine-derived structural unit, at least a structural unit derived from a silicon-containing diamine represented by the following formula (1) (provided that the silicon-containing diamine has a number average molecular weight of 500 or less); the polyimide contains, as the aromatic acid dianhydride-derived structural unit, preferably a structural unit derived from one or more selected from 1, 2, 4, 5-tetracarboxylic dianhydride, 3,3', 4,4'-diphenyl ether tetracarboxylic dianhydride, 3,3',4,4'-diphenyl sulfone tetracarboxylic dianhydride, and 3,3',4,4'-biphenyltetracarboxylic dianhydride; and a proportion of the structural unit derived from the silicon-containing diamine is 5 to 100 mol% relative to the entire diamine-derived structural unit: 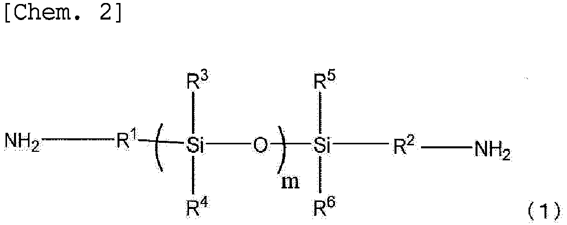 (wherein R¹ and R² are each independently a divalent aliphatic hydrocarbon group having 3 to 20 carbons, R³, R⁴, R⁵, and R⁶ are each independently a monovalent aliphatic hydrocarbon group having 1 to 3 carbons, and m is 1 or 2).

Since the structural units of the polyimide and the proportions thereof are determined depending on the types and proportions of the diamine and acid dianhydride used as raw materials, the structural units constituting the polyimide will be described with reference to the diamine and acid dianhydride to be used. The proportions of the diamine and acid dianhydride used for producing the polyimide are the same as the proportions of the diamine-derived and acid dianhydride-derived structural units present in the polyimide.

The silicon-containing diamine represented by the above formula (1) is characterized in that it has the above chemical structure, m is 1 or 2, and the number average molecular weight is 500 or less.

When the silicon-containing diamine is used as a monomer to prepare a polyimide film, an outgas compound such as a cyclic siloxane is generated in a very small amount during heating. Specifically, an amount of the cyclic siloxane generated by heat treatment at 180°C for 0.5 hours in a nitrogen gas stream is 1 µg (1 ppm) or less per g of the polyimide film. Further, in the polyimide film of the present invention, weight reduction due to AO irradiation is suppressed. That is, it is excellent in AO resistance.

In the silicon-containing diamine represented by the above formula (1), m representing the number of repeating units of siloxane units in the main chain is 1 or 2, and m is more preferably 1 from the viewpoint of suppressing the amount of the cyclic siloxane generated. The molecular weight of the silicon-containing diamine is 500 or less as a number average molecular weight, and, from the viewpoints of the amount of the cyclic siloxane generated and the AO resistance, the number average molecular weight is more preferably 400 or less, and even more preferably 300 or less. The number average molecular weight of the silicon-containing diamine can be measured by liquid chromatography or gel permeation chromatography (GPC).

In the above formula (1), R¹ and R² are each independently a divalent aliphatic hydrocarbon group having 3 to 20 carbons. From the viewpoint of AO resistance, an alkylene group having 1 to 6 carbons is preferred, and a methylene group, an ethylene group, or a propylene group is particularly preferred. R³, R⁴, R⁵, and R⁶ are each independently a monovalent aliphatic hydrocarbon group having 1 to 3 carbons. From the viewpoint of AO resistance, a methyl group is preferred.

In the formula (1), R¹, R², R³, R⁴, R⁵, and R⁶ may be the same as or different from one another.

The proportion of the structural unit derived from the silicon-containing diamine represented by the formula (1) is 5 to 100 mol% of the entire diamine-derived structural unit. When the proportion is less than 5 mol%, a thin film layer of SiO₂ is not sufficiently formed on the polyimide film surface, and AO resistance is impaired, which is not preferred. The lower limit of the proportion of the structural unit derived from the silicon-containing diamine relative to the entire diamine-derived structural unit is more preferably 20 mol%, even more preferably 50 mol%, and still more preferably 65 mol%.

Meanwhile, the upper limit of the proportion of the structural unit derived from the silicon-containing diamine is preferably 90 mol% from the viewpoints of heat resistance and the amount of the cyclic siloxane generated. The entire diamine-derived structural unit may be occupied by a structural unit derived from one silicon-containing diamine or a combination of a plurality of silicon-containing diamines.

In the polyimide for a spacecraft of the present invention, an aromatic diamine can be used in addition to the silicon-containing diamine represented by the above formula (1). The aromatic diamine used is one or more aromatic diamines selected from 2,2-bis(4-aminophenoxyphenyl)propane (BAPP) and 9, 9-bis (4-aminophenyl) fluorene (BAFL) . When BAPP and/or BAFL is used, the heat resistance and AO resistance of the polyimide film are improved, which is preferred.

That is, according to one preferred embodiment of the present invention, the diamine-derived structural unit constituting the polyimide is composed of a combination of the silicon-containing diamine represented by the formula (1) and the aromatic diamine.

The proportion of the aromatic diamine (BAPP and/or BAFL)-derived structural unit constituting the polyimide is in a range of 0 to 95 mol% of the entire diamine-derived structural unit. From the viewpoint of AO resistance, the upper limit of the proportion of the aromatic diamine-derived structural unit is preferably 80 mol%, more preferably 50 mol%, and even more preferably 35 mol%. Meanwhile, the lower limit of the proportion of the aromatic diamine-derived structural unit is preferably 10 mol% from the viewpoints of heat resistance and the amount of the cyclic siloxane generated.

In addition to the silicon-containing diamine represented by the formula (1) and the aromatic diamine (BAPP and/or BAFL), another diamine (hereinafter referred to as "third diamine") may be used. The third diamine is suitably a diamine having one or more aromatic rings from the viewpoint of heat resistance and AO resistance.

Examples of the third diamine include 2,2'-dimethyl-4,4'-diaminobiphenyl (also known as 2,2'-dimethyl-benzidine), 3,3'-dimethyl-4,4'-diaminobiphenyl, 4,4'-diaminodiphenyl ether, 3,4'-diaminodiphenyl ether, 4,6-dimethyl-m-phenylenediamine, 2,5-dimethyl-p-phenylenediamine, 2,4-diaminomesitylene, 4,4'-methylenedi-o-toluidine, 4,4'-methylenedi-2,6-xylidine, 4,4'-methylene-2,6-diethylaniline, 2,4-toluenediamine, m-phenylenediamine, p-phenylenediamine, 4,4'-diaminodiphenylpropane, 3,3'-diaminodiphenylpropane, 4,4'-diaminodiphenylethane, 3,3'-diaminodiphenylethane, 4,4'-diaminodiphenylmethane, 3,3'-diaminodiphenylmethane, 4,4'-diaminodiphenyl sulfide, 3,3'-diaminodiphenyl sulfide, 4,4'-diaminodiphenyl sulfone, 3,3'-diaminodiphenyl sulfone,

4,4'-diaminodiphenyl ether, 3,3'-diaminodiphenyl ether, 1,3-bis(3-aminophenoxy)benzene, 1,3-bis(4-aminophenoxy)benzene, 1,4-bis(4-aminophenoxy)benzene, benzidine, 3,3'-diaminobiphenyl, 3,3'-dimethyl-4,4'-diaminobiphenyl, 3,3'-dimethoxybenzidine, 4,4'-diamino-p-terphenyl, 3,3'-diamino-p-terphenyl, bis(p-β-amino-t-butylphenyl) ether, bis(p-β-methyl-δ-aminopentyl)benzene, p-bis(2-methyl-4-aminopentyl)benzene, p-bis(1,1-dimethyl-5-aminopentyl)benzene,

1,5-diaminonaphthalene, 2,6-diaminonaphthalene, 2,4-bis(β-amino-t-butyl)toluene, 2,4-diaminotoluene, m-xylene-2,5-diamine, p-xylene-2,5-diamine, m-xylylenediamine, p-xylylenediamine, 2,6-diaminopyridine, 2,5-diaminopyridine, 2,5-diamino-1,3,4-oxadiazole, piperazine, and 5-amino-2-(4-aminophenyl)benzimidazole.

These third diamines may be used alone, or two or more thereof may be used in combination.

The proportion of a structural unit derived from the third diamine constituting the polyimide is preferably 20 mol% or less, and more preferably 10 mol% or less of the entire diamine-derived structural unit.

The polyimide for a spacecraft of the present invention contains, as an acid dianhydride-derived structural unit, at least a structural unit derived from an acid dianhydride containing an aromatic structure in the skeleton (hereinafter referred to as "aromatic acid dianhydride") . The use of the aromatic acid dianhydride improves the properties of the polyimide film, such as heat resistance. It preferably contains a structural unit derived from one or more selected from 1,2,4,5-tetracarboxylic dianhydride (PMDA, also referred to as "pyromellitic dianhydride"), 3,3',4,4' -diphenyl ether tetracarboxylic dianhydride (ODPA), 3,3',4,4'-diphenyl sulfone tetracarboxylic dianhydride (DSDA), and 3, 3',4,4' -biphenyltetracarboxylic dianhydride (BPDA) . Hereinafter, PMDA, ODPA, DSDA, and BPDA are also collectively referred to as "preferable aromatic acid dianhydrides". That is, one or more selected from the preferable aromatic acid dianhydrides is preferably used for producing the polyimide of the present invention. The use of these preferable aromatic acid dianhydrides further improves the properties required of the polyimide film for a spacecraft, such as heat resistance of the polyimide film.

The proportion of the aromatic acid dianhydride-derived structural unit constituting the polyimide is preferably 50 mol% or more, more preferably 70 mol% or more, and even more preferably 90 mol% or more of the entire acid dianhydride-derived structural unit. The entire aromatic acid dianhydride-derived structural unit may be occupied by a structural unit derived from the preferable aromatic acid dianhydrides; i.e., PMDA, ODPA, DSDA, and BPDA, or a combination of two or three of these aromatic acid dianhydrides.

In addition to PMDA, ODPA, DSDA, and/or BPDA, another acid dianhydride (hereinafter referred to as a "second acid dianhydride") may be used. The second acid dianhydride is suitably an acid dianhydride having one or more aromatic rings; i.e., an aromatic acid dianhydride from the viewpoints of heat resistance and AO resistance.

As the second acid dianhydride, an acid dianhydride of an aromatic tetracarboxylic acid can be used. Examples thereof include 4,4'-(2,2'-hexafluoroisopropylidene)diphthalic dianhydride, naphthalene-2,3,6,7-tetracarboxylic dianhydride, naphthalene-1,2,5,6-tetracarboxylic dianhydride, naphthalene-1,2,6,7-tetracarboxylic dianhydride, pyromellitic dianhydride, 3,3',4,4'-benzophenone tetracarboxylic dianhydride, 2,2',3,3'-benzophenone tetracarboxylic dianhydride, 2,3,3',4'-benzophenone tetracarboxylic dianhydride,

naphthalene-1,2,4,5-tetracarboxylic dianhydride, naphthalene-1,4,5,8-tetracarboxylic dianhydride, naphthalene-1,2,6,7-tetracarboxylic dianhydride, 4,8-dimethyl-1,2,3,5,6,7-hexahydronaphthalene-1,2,5,6-tetracarboxy lic dianhydride, 4,8-dimethyl-1,2,3,5,6,7-hexahydronaphthalene-2,3,6,7-tetracarboxy lic dianhydride, 2,6-dichloronaphthalene-1,4,5,8-tetracarboxylic dianhydride, 2,7-dichloronaphthalene-1,4,5,8-tetracarboxylic dianhydride, 2,3,6,7-tetrachloronaphthalene-1,4,5,8-tetracarboxylic dianhydride, 1,4,5,8-tetrachloronaphthalene-2,3,6,7-tetracarboxylic dianhydride,

2,2',3,3'-biphenyltetracarboxylic dianhydride, 2,3,3',4'-biphenyltetracarboxylic dianhydride, 3,3",4,4"-p-terphenyltetracarboxylic dianhydride, 2,2",3,3"-p-terphenyltetracarboxylic dianhydride, 2,3,3",4"-p-terphenyltetracarboxylic dianhydride, 2,2-bis(2,3-dicarboxyphenyl)-propane dianhydride, 2,2-bis(3,4-dicarboxyphenyl)-propane dianhydride, bis(2,3-dicarboxyphenyl) ether dianhydride, bis(2,3-dicarboxyphenyl)methane dianhydride, bis(3.4-dicarboxyphenyl)methane dianhydride, bis(2,3-dicarboxyphenyl) sulfone dianhydride, bis(3,4-dicarboxyphenyl) sulfone dianhydride, 1,1-bis(2,3-dicarboxyphenyl)ethane dianhydride, 1,1-bis(3,4-dicarboxyphenyl)ethane dianhydride,

perylene-2,3,8,9-tetracarboxylic dianhydride, perylene-3,4,9,10-tetracarboxylic dianhydride, perylene-4,5,10,11-tetracarboxylic dianhydride, perylene-5,6,11,12-tetracarboxylic dianhydride, phenanthrene-1,2,7,8-tetracarboxylic dianhydride, phenanthrene-1,2,6,7-tetracarboxylic dianhydride, phenanthrene-1,2,9,10-tetracarboxylic dianhydride, cyclopentane-1,2,3,4-tetracarboxylic dianhydride, pyrazine-2,3,5,6-tetracarboxylic dianhydride, pyrrolidine-2,3,4,5-tetracarboxylic dianhydride, thiophene-2,3,4,5-tetracarboxylic dianhydride, 4,4'-oxydiphthalic dianhydride, (trifluoromethyl)pyromellitic dianhydride, di(trifluoromethyl)pyromellitic dianhydride, di(heptafluoropropyl)pyromellitic dianhydride, pentafluoroethylpyromellitic dianhydride, bis{3,5-di(trifluoromethyl)phenoxy}pyromellitic dianhydride,

2,2-bis(3,4-dicarboxyphenyl)hexafluoropropane dianhydride, 5,5'-bis(trifluoromethyl)-3,3',4,4'-tetracarboxybiphenyl dianhydride, 2,2',5,5'-tetrakis(trifluoromethyl)-3,3',4,4'-tetracarboxybiphenyl dianhydride, 5,5'-bis(trifluoromethyl)-3,3',4,4'-tetracarboxydiphenyl ether dianhydride, 5,5'-bis(trifluoromethyl)-3,3',4,4'-tetracarboxybenzophenone dianhydride, bis{ (trifluoromethyl)dicarboxyphenoxy}benzene dianhydride, bis{ (trifluoromethyl)dicarboxyphenoxy}trifluoromethylbenzene dianhydride, bis(dicarboxyphenoxy)trifluoromethylbenzene dianhydride,

bis(dicarboxyphenoxy)bis(trifluoromethyl)benzene dianhydride, bis(dicarboxyphenoxy)tetrakis(trifluoromethyl)benzene dianhydride, 2,2-bis{4-(3,4-dicarboxyphenoxy)phenyl}hexafluoropropane dianhydride, bis{ (trifluoromethyl)dicarboxyphenoxy}biphenyl dianhydride, bis{ (trifluoromethyl)dicarboxyphenoxy}bis(trifluoromethyl)biphenyl dianhydride, bis{ (trifluoromethyl)dicarboxyphenoxy}diphenyl ether dianhydride, and bis(dicarboxyphenoxy)bis(trifluoromethyl)biphenyl dianhydride. These acid dianhydrides may be used alone, or two or more thereof may be used in combination.

The proportion of the second acid dianhydride-derived structural unit constituting the polyimide is preferably 20 mol% or less, and more preferably 10 mol% or less of the entire acid dianhydride-derived structural unit.

In the present invention, a precursor of the polyimide of the present invention (hereinafter may be referred to as "the present polyimide precursor") can be produced by a known method in which a diamine containing the silicon-containing diamine and an acid dianhydride containing the aromatic acid dianhydride are used at a mole ratio of 0.9 to 1.1 and polymerized in an organic polar solvent. For example, the present polyimide precursor is produced by dissolving a diamine in an aprotic amide-based solvent such as N,N-dimethylacetamide or N-methyl-2-pyrrolidone under a nitrogen stream, then adding an acid dianhydride thereto, and reacting the mixture at room temperature for about 3 to 20 hours . For promoting the reaction, heating may be performed at a temperature of 40°C to 80°C for 15 minutes to 5 hours.

Other examples of the organic polar solvent used for the polymerization include dimethylformamide, 2-butanone, diglyme, xylene, and γ-butyrolactone. These may be used alone, or two or more thereof may be used in combination. In order to increase solubility, xylene or hexane may be added.

The present polyimide precursor has a structure in which a diamine and an acid dianhydride do not completely form an imide bond and an amide bond remains partially. A molecular terminal of the polyimide precursor may be blocked with an aromatic monoamine or an aromatic monocarboxylic dianhydride.

The polyimide for a spacecraft of the present invention is produced by imidizing the present polyimide precursor. Imidization can be performed by a thermal imidization method, a chemical imidization method, or a like method. The thermal imidization is performed by heat-treating a solution of the present polyimide precursor at a temperature of about 180°C to 360°C for about 10 minutes to 20 hours. Depending on the required mechanical properties, it is possible to vary the heat treatment temperature within a range of 180°C and 360°C.

The thermal imidization is completed within a relatively short time by selecting a combination of the types of the acid dianhydride and the diamine and the type of the solvent. The thermal imidization may be performed by heat treatment within 60 minutes, including preheating for removing the solvent.

For the chemical imidization, a dehydrating agent and a catalyst are added to the polyimide precursor solution, and a chemical dehydration reaction is performed at 30°C to 60°C. Typical examples of the dehydrating agent include acetic anhydride, and typical examples of the reaction catalyst include pyridine.

The polyimide film for a spacecraft of the present invention is formed by applying a solution of the present polyimide precursor or the polyimide of the present invention onto any supporting substrate made of glass, metal, or resin, followed by heat treatment.

When a solution of the present polyimide precursor is used, the polyimide film can be formed by heating the solution at a temperature of 150°C or lower for 2 minutes to 60 minutes to remove the solvent, and then performing thermal imidization by heat treatment at a temperature of about 180°C to 360°C for about 10 minutes to 20 hours.

When a solution of the polyimide of the present invention is used, the polyimide film can be formed by heating the solution at a temperature of 150°C or lower for 2 to 60 minutes to remove the solvent.

The preferable degree of polymerization of the present polyimide precursor corresponds to a viscosity of the polyimide precursor solution in a range of 1000 to 100000 cP, preferably 3000 to 10000 cP as measured by an E-type viscometer. The molecular weight of the polyimide precursor can be determined by a GPC method. A preferable molecular weight range (in terms of polystyrene) of the present polyimide precursor is desirably in a range of 15000 to 250000 as a number average molecular weight and 30000 to 800000 as a weight average molecular weight. However, these numerical ranges are just guidelines, and not all polyimide precursors having molecular weights falling outside the ranges cannot be used. The preferable degree of polymerization (molecular weight) of the polyimide of the present invention is also in the same range as that described above for the molecular weight of the present polyimide precursor.

In the polyimide film for a spacecraft of the present invention, an additional optional component may be added in an amount of 10 wt.% or less depending on the desired physical properties. Examples of the additional optional component include a polyimide other than the polyimide for a spacecraft of the present invention, an organic filler, and an inorganic filler. When the polyimide film is applied to a member for a low-earth-orbit satellite (e.g., a solar battery panel structure or a thermal blanket), the polyimide film preferably contains the polyimide for a spacecraft of the present invention in an amount of 90 wt.% or more. The amount is more preferably 95 wt.% or more, and even more preferably 98 wt.% or more.

The polyimide film for a spacecraft of the present invention generates a small amount of outgas upon heating. Specifically, when the polyimide film having a thickness of 25 um is subjected to heat treatment at 180°C for 0.5 hours in a nitrogen gas stream, the amount of a cyclic siloxane generated is preferably 1 ppm or less per g of the film. When the amount of the cyclic siloxane generated is within the above range, the polyimide film can be suitably applied to the applications requiring a reduction in outgas compound, such as spacecraft members used in low-altitude orbits (e.g., solar battery panel structures and thermal blankets) and flexible circuit boards.

Further, the polyimide film for a spacecraft of the present invention has high AO resistance. Specifically, when the polyimide film having a thickness of 25 µm is irradiated with AO at a dose of 1.0 × 10²⁰ to 1.0 × 10²¹ atoms/cm² per 25 um of film thickness under vacuum at 20°C, the weight reduction rate in an irradiation area is preferably 0.5 wt.% or less. The weight reduction rate of the polyimide film is more preferably 0.3 wt.% or less. When the weight reduction rate of the polyimide film by AO irradiation is within this range, the polyimide film can be suitably applied to the applications requiring durability against AO, such as spacecraft members used in low-altitude orbits or ultra-low-altitude orbits (e.g., solar battery panel structures and thermal blankets). Here, the term "under vacuum" refers to a state of a pressure extremely lower than the atmospheric pressure. Specifically, the pressure is 100 Pa or less, particularly 10⁻⁸ Pa to 10⁻¹ Pa, and further 10⁻⁸ Pa to 10⁻⁵ Pa.

In addition, when the polyimide film for a spacecraft of the present invention having a thickness of 25 um is irradiated with AO at a dose of 1.0 × 10²⁰ to 1.0 × 10²¹ atoms/cm² under vacuum at 20°C, the rate of change in solar absorptance before and after the irradiation is preferably ± 10% or less. The rate of change in normal infrared emittance before and after the irradiation is preferably ± 10% or less. When the rate of change falls within such a range, the polyimide film can be suitably applied to applications requiring durability against AO, such as spacecraft members used in low-altitude orbits (e.g., solar battery panel structures and thermal blankets) . Preferably, the rate of change in solar absorptance and the rate of change in normal infrared emittance before and after the irradiation are ± 5% or less.

The form of use of the polyimide film for a spacecraft of the present invention is not limited. However, when the polyimide film is used as a material for a spacecraft which is an airframe flying in the outer space, particularly as a solar battery panel structure for a low-earth-orbit satellite or a thermal blanket for a low-earth-orbit satellite, the polyimide film is preferably used as a laminate with another substance.

When the polyimide film of the present invention is used as a solar battery panel structure for a low-earth-orbit satellite, a structure in which the polyimide film is bonded onto an aluminum honeycomb plate and a solar battery is bonded thereon with a silicon adhesive can be exemplified, although the present invention is not limited thereto.

When the polyimide film of the present invention is used as a thermal blanket for a low-earth-orbit satellite, a laminated film in which a metal film made of gold, silver, or aluminum is laminated on both surfaces or one surface of the polyimide film can be exemplified. The metal film may be laminated on the polyimide film by bonding a sheet-like metal film, or by laminating a metal film having a thickness of hundreds of angstroms by a vapor deposition method. On this laminate, the polyimide film of the present invention and a metal layer may be further repeatedly laminated to form a multilayer body.

As described above, the polyimide film for a spacecraft of the present invention generates a reduced amount of outgas and is excellent in durability against AO irradiation. Therefore, the polyimide film can be particularly suitably used as a member for the aforementioned solar battery panel structure for a low-earth-orbit satellite or the spacecraft (e.g., an artificial satellite or a space station) used in a low-altitude orbit, particularly in a space region of an altitude of 100 km to 700 km, such as the thermal blanket for a low-earth-altitude satellite.

### Example 1

The present invention will next be described in detail with reference to Examples and Comparative Examples. The present invention is not limited to the contents of these Examples.

Abbreviations of materials and evaluation methods used in the Examples and the Comparative Examples will be indicated below.

### Acid Dianhydride

DSDA: 3,3',4,4'-diphenylsulfone tetracarboxylic dianhydride
ODPA: 3,3',4,4'-diphenylether tetracarboxylic dianhydride
BPDA: 3,3',4,4'-biphenyltetracarboxylic dianhydride
PMDA: 1,2,4,5-tetracarboxylic dianhydride

### Diamine

Silicon-containing diamine A: diaminosiloxane represented by the formula (1) (R¹ and R² are 1,2-propylene groups, and R³, R⁴, R⁵, and R⁶ are methyl groups; a mixture of m = 1 and 2, number average molecular weight = 249)

Silicon-containing diamine B: diaminosiloxane represented by the following formula (2) (a mixture wherein m is in a range of 1 to 20, number average molecular weight = about 740)
Silicon-containing diamine C: diaminosiloxane represented by the following formula (2) (a mixture wherein m is in a range of 1 to 20, number average molecular weight = about 1000)
Silicon-containing diamine D: diaminosiloxane represented by the following formula (2) (a mixture wherein m is in a range of 1 to 20, number average molecular weight = about 1240)
Silicon-containing diamine E: diaminosiloxane represented by the following formula (2) (a mixture wherein m is in a range of 1 to 20, number average molecular weight = about 2000)
Silicon-containing diamine F: diaminosiloxane represented by the following formula (3) (j and n are each 1 or more, a mixture in which the total number of j and n is in a range of 2 to 20, number average molecular weight = about 1320)

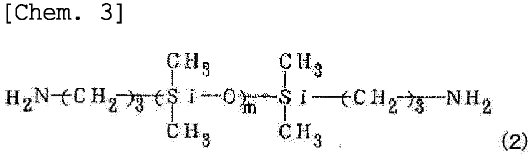

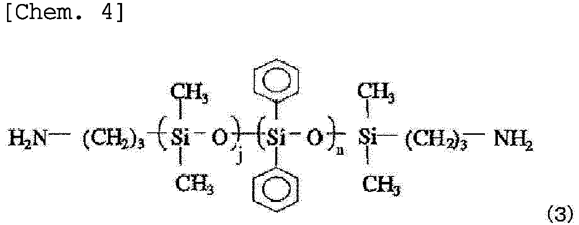

Aromatic diamine BAPP: 2,2-bis(4-aminophenoxyphenyl)propane
Aromatic diamine BAFL: 9,9-bis(4-aminophenyl)fluorene

The polyimide films prepared in the Examples and the Comparative Examples were evaluated by the following test methods.

### AO Resistance Test

A circular area of ϕ 20 mm in a test piece of the polyimide film (ϕ 25 mm, 25 µm thick) was irradiated with AO at a dose of 3 × 10²⁰ to 1 × 10²¹ atoms/cm² under a vacuum of 10⁻⁵ Pa by an AO irradiation apparatus of Vacuum complex environment test equipment in Tsukuba Space Center of Japan Aerospace Exploration Agency (JAXA), National Research and Development Agency, and the mass reduction rate per weight of the polyimide film before and after the irradiation in the irradiation area was measured as an indicator of erosion.

In addition, the rate of change in solar absorptance of the polyimide film before and after the AO irradiation was measured with a solar absorptance measuring apparatus (available from Hitachi High-Technologies Corporation; spectrophotometer U-4100, measurement wavelength range: 250 nm to 2500 nm, incident angle: 5°). And the rate of change in normal infrared emittance was measured with a normal infrared emittance measuring apparatus (available from AZ Technology LLC; emissometer/reflectometer TESA2000). In the evaluation of the change rate, an increase in numerical value is indicated by +, and a decrease in numerical value is indicated by -.

### Outgas Test

A test piece of the polyimide film (3 mm × 20 mm, 25 µm thick) was subjected to GC-MS (gas chromatography-mass spectrometry) to analyze outgas compound generated by heating the test piece at 180°C for 30 minutes. As a result, the case where the amount of each of the cyclic siloxanes having 3 to 20 siloxane units generated as the outgas was 1 µg (1 ppm) or less per g of the polyimide film was evaluated as Good, and the case where the amount of any one of the cyclic siloxanes having the above numbers of siloxane units generated was more than 1 µg (1 ppm) was evaluated as Poor. Measurement conditions for GC-MS will be described below.
Analytical method: heat generated gas gas chromatography-mass spectrometry
Thermal desorption system: Turbo Matrix 650ATD (Perkin Elmer)
GC-MS: Jms-Q1000GCK9 Ultra Quad GC/MS (JEOL)
Column: VF-5ms 30 m × 0.25 mm × 0.25 µm
Column temperature raising conditions: holding at 40°C (3 min) → temperature raising at 10°C/min → holding at 280°C (23 min)
Carrier gas: helium
MS ionization method: EI method
Measurement range (m/z): 10 to 500

### Glass transition temperature; Tg

When the temperature of a test piece of the polyimide film (5 mm × 70 mm) was raised from 23°C to 400°C at a rate of 5°C/min using a dynamic thermomechanical analyzer, the dynamic viscoelasticity was measured. The temperature at which the maximum value of tan δ was obtained was determined as the glass transition temperature (Tg).

### Tensile Elastic Modulus; E'

A test piece of the polyimide film (12.4 mm × 160 mm) was subjected to a tensile test at 50 mm/min under a load of 10 kg using a tension tester.

### Example 1

Acid dianhydride DSDA (0.11 mol), 200 g of N-methyl-2-pyrrolidone (NMP), and 200 g of xylene were placed in a 1000-ml separable flask and mixed at room temperature. Silicon-containing diamine A (0.085 mol) was then added dropwise using a dropping funnel. This reaction solution was ice-cooled under stirring, and aromatic diamine BAPP (0.025 mol) was added thereto. The mixture was stirred at room temperature for 2 hours to prepare a polyimide precursor solution. The mole ratio (a/b) of the acid dianhydride (a) to the total amount of the diamines (b) was set 1.0. The temperature of the polyimide precursor solution was raised to 190°C, and the solution was heated and stirred for 20 hours to prepare a solution of polyimide having a weight average molecular weight (Mw) of 20000. The polyimide solution was applied onto a release film, dried to form a film, and the release film was peeled off to produce a polyimide film. The physical properties of the polyimide film were as follows: a glass transition temperature Tg of 150°C and a tensile elastic modulus E' of 1.75 GPa.

The results of the AO resistance test and the outgas test performed on the produced polyimide film are shown in Table 3.

### Examples 2 to 11 and Comparative Examples 1 to 7

A polyimide precursor solution was prepared in the same manner as in Example 1 except that the acid dianhydride (a) and the diamine (b) were changed to the compositions shown in Tables 1 and 2, and then a polyimide film was produced. The numerals in Tables 1 and 2 indicate the ratio of the amount of the acid dianhydride or diamine used (mol) to the amount of the acid dianhydride used (mol).

The results of the AO resistance test and the outgas test performed on the produced polyimide films are shown in Tables 3 and 4.

### Example 12

Acid dianhydride PMDA (0.11 mol) and 400 g of N-methyl-2-pyrrolidone (NMP) were placed in a 1000-ml separable flask and mixed at room temperature. Next, silicon-containing diamine A (0.033 mol) was added dropwise using a dropping funnel. The reaction solution was ice-cooled under stirring, and aromatic diamine BAPP (0.077 mol) was added thereto. The mixture was stirred at room temperature for 2 hours to prepare a polyimide precursor solution. The mole ratio (a/b) of the acid dianhydride (a) to the total amount of the diamines (b) was 1.0. The polyimide precursor solution was applied onto a release film, dried and heated in an oven at 200°C for 20 minutes for imidization, and then the release film was peeled off to produce a polyimide film. The physical properties of the polyimide film were as follows: a glass transition temperature Tg of 250°C and a tensile elastic modulus E' of 2.40 GPa. The results of the AO resistance test and the outgas test performed on the produced polyimide film are shown in Table 3.

### Examples 13 to 15

A polyimide precursor solution was prepared in the same manner as in Example 12 except that the acid dianhydride (a) and the diamine (b) were changed to the compositions shown in Table 1, and then a polyimide film was produced. The numerals in Table 1 indicate the ratio of the amount of the acid dianhydride or diamine used (mol) to the amount of the acid dianhydride used (mol).

The results of the AO resistance test and the outgas test performed on the produced polymide films are shown in Table 3.

**[Table 1]**

| Example | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Acid dianhydride DSDA | 1 | 1 | 1 | | | | | | | | | | | | |
| Acid dianhydride ODPA | | | | 1 | 1 | | | 1 | 1 | | | | | | |
| Acid dianhydride BPDA | | | | | | 1 | 1 | | | 1 | 1 | | | | |
| Acid dianhydride PMDA | | | | | | | | | | | | 1 | 1 | 1 | 1 |
| Silicon-containing diamine A | 0.77 | 0.6 | 0.3 | 0.77 | 0.3 | 0.77 | 0.3 | 0.77 | 0.3 | 0.77 | 0.3 | 0.3 | 0.77 | 0.3 | 0.77 |
| Aromatic diamine BAPP | 0.23 | 0.4 | 0.7 | 0.23 | 0.7 | 0.23 | 0.7 | | | | | 0.7 | 0.23 | | |
| Aromatic diamine BAFL | | | | | | | | 0.23 | 0.7 | 0.23 | 0.7 | | | 0.7 | 0.23 |

| | | | | | | | | | | | | | | | |
|---|---|---|---|---|---|---|---|---|---|---|---|---|---|---|---|
| Note: The numerals in the table indicate the mole ratio relative to acid dianhydride. | | | | | | | | | | | | | | | |

**[Table 2]**

| Comparative Example | 1 | 2 | 3 | 4 | 5 | 6 | 7 |
|---|---|---|---|---|---|---|---|
| Acid dianhydride DSDA | 1 | | 1 | 1 | 1 | 1 | 1 |
| Acid dianhydride ODPA | | 1 | | | | | |
| Silicon-containing diamine B | 0.77 | 0.77 | 0.77 | | | | |
| Silicon-containing diamine C | | | | 0.77 | | | |
| Siticon-containing diamine D | | | | | 0.77 | | |
| Siticon-containing diamine E | | | | | | 0.77 | |
| Siticon-containing diamine F | | | | | | | 0.77 |
| Aromatic diamine BAPP | 0.23 | 0.23 | | 0.23 | 0.23 | 0.23 | 0.23 |
| Aromatic diamine BAFL | | | 0.23 | | | | |

| | | | | | | | |
|---|---|---|---|---|---|---|---|
| Note: The numerals in the table indicate the mole ratio relative to acid dianhydride. | | | | | | | |

**[Table 3]**

| Example | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| AO irradiation dose [atoms/cm²] | 3 × 10²⁰ | 3 × 10²⁰ | 3 × 10²⁰ | 6 × 10²⁰ | 6 × 10²⁰ | 6 × 10²⁰ | 1 × 10²¹ | 1 × 10²¹ | 1 × 10²¹ | 3 × 10²⁰ | 3 × 10²⁰ | 3 × 10²⁰ | 3 × 10²⁰ | 3 × 10²⁰ | 3 × 10 ²⁰ |
| Mass reduction rate [%] before and after irradiation | 0.17 | 0.16 | 0.15 | 0.19 | 0.19 | 0.17 | 0.17 | 0.24 | 0.21 | 0.14 | 0.16 | 0.19 | 0.17 | 0.28 | 0.17 |
| Change rate [%] of solar absorptance before and after irradiation | -3 | 3.2 | 1.1 | 3.9 | 3.1 | -3.1 | 0 | 1 | 4.2 | 2.3 | 1.5 | 1.2 | 1.8 | 1.3 | 1.8 |
| Change rate [%] of normal infrared emittance before and after irradiation | -0.2 | -0.5 | -0.2 | 0.3 | 0 | 1.2 | 0.7 | 1 | 0.7 | 0.6 | 0.3 | 0.1 | 0.3 | 0 | 0.4 |
| Outgas test result | Good | Good | Good | Good | Good | Good | Good | Good | Good | Good | Good | Good | Good | Good | Good |

**[Table 4]**

| Comparative Example | 1 | 2 | 3 | 4 | 5 | 6 | 7 |
|---|---|---|---|---|---|---|---|
| AO irradiation dose [atoms/cm²] | 3 × 10²⁰ | 3 × 10²⁰ | 3 × 10²⁰ | 6 × 10²⁰ | 6 × 10²⁰ | 6 × 10²⁰ | 1 × 10²¹ |
| Mass reduction rate [%] before and after irradiation | 0.43 | 0.62 | 0.53 | 0.75 | 0.85 | 0.93 | 0.73 |
| Outgas test result | Poor | Poor | Poor | Poor | Poor | Poor | Poor |

As is clear from the results of the Examples and the Comparative Examples, the polyimide film for a spacecraft of the present invention exhibits a small mass reduction due to AO irradiation, a small change in solar absorptance due to AO irradiation, and a small change in normal infrared emittance due to AO irradiation. Further, the polyimide film for a spacecraft of the present invention generated a small amount of outgas upon heating.

That indicates that the polyimiade film for a spacecraft of the present invention is suitable as a member of a spacecraft (e.g., an artificial satellite or a space station) used in a low-altitude orbit, such as a solar battery panel structure for a low-earth-orbit satellite or a thermal blanket for a low-earth-orbit satellite.

### Industrial Applicability

The polyimide film for a spacecraft of the present invention can be suitably used as a member for a spacecraft in particular.

## Claims

1. A polyimide for a spacecraft, the polyimide comprising a diamine-derived structural unit and an aromatic acid dianhydride-derived structural unit, wherein the polyimide comprises, as the diamine-derived structural unit, at least a structural unit derived from a silicon-containing diamine represented by the following formula (1) (provided that the silicon-containing diamine has a number average molecular weight of 500 or less), and a proportion of the structural unit derived from the silicon-containing diamine is 5 to 100 mol% relative to the entire diamine-derived structural unit: 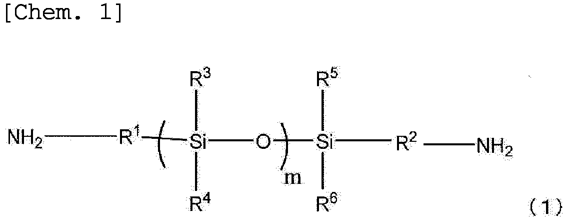 (wherein R¹ and R² are each independently a divalent aliphatic hydrocarbon group having 3 to 20 carbons, R³, R⁴, R⁵, and R⁶ are each independently a monovalent aliphatic hydrocarbon group having 1 to 3 carbons, and m is 1 or 2).

2. The polyimide for a spacecraft according to claim 1, wherein the polyimide comprises, as the aromatic acid dianhydride-derived structural unit, at least a structural unit derived from one or more selected from 1,2,4, 5-tetracarboxylic dianhydride, 3,3',4,4'-diphenyl ether tetracarboxylic dianhydride, 3,3',4,4'-diphenyl sulfone tetracarboxylic dianhydride, and 3,3',4,4'-biphenyltetracarboxylic dianhydride.

3. The polyimide for a spacecraft according to claim 1, wherein the polyimide further comprises, as the diamine-derived structural unit, one or more selected from 2,2-bis(4-aminophenoxyphenyl)propane and 9,9-bis(4-aminophenyl)fluorene.

4. A polyimide film for a spacecraft, the polyimide film comprising the polyimide for a spacecraft described in any one of claims 1 to 3 in an amount of 90 wt.% or more.

5. The polyimide film for a spacecraft according to claim 4, wherein an amount of a cyclic siloxane generated by heat treatment at 180°C for 0.5 hours under a nitrogen gas stream is 1 µg or less per g of the film.

6. The polyimide film for a spacecraft according to claim 4, wherein a weight reduction rate in an irradiation area is 0.5 wt.% or less by irradiation with atomic oxygen under vacuum and under conditions of 20°C, a film thickness of 25 um, and an irradiation dose of 1.0 × 10²⁰ to 2.0 × 10²¹ atoms/cm².

7. A material for a spacecraft, the material comprising the polyimide film for a spacecraft described in claim 4.

8. A solar battery panel structure for a low-earth-orbit satellite, the solar battery panel structure comprising the polyimide film for a spacecraft described in claim 4.

9. A laminated film comprising the polyimide film for a spacecraft described in claim 4 and a metal film laminated on the polyimide film.

10. A thermal blanket for a low-earth-orbit satellite, the thermal blanket comprising the laminated film described in claim 9.

11. An artificial satellite comprising the thermal blanket described in claim 10 on a surface or inside of an airframe of the artificial satellite.
